Europäisches Patentamt

European Patent Office

Office européen des brevets

(11) Publication number: **0 304 988 B1**

## EUROPEAN PATENT SPECIFICATION

(45) Date of publication of patent specification: **19.11.92**

(51) Int. Cl.⁵: **E21B 7/24**, E21B 31/00, E21B 47/02, E21B 47/12, G01V 1/40, E21B 21/00

(21) Application number: **88201736.1**

(22) Date of filing: **15.08.88**

(54) **Method and apparatus for producing pressure variations in a drilling fluid.**

(30) Priority: **21.08.87 GB 8719782**

(43) Date of publication of application:
**01.03.89 Bulletin 89/09**

(45) Publication of the grant of the patent:
**19.11.92 Bulletin 92/47**

(84) Designated Contracting States:
**AT BE DE FR GB IT NL**

(56) References cited:
EP-A- 0 062 111    GB-A- 1 198 328
GB-A- 2 123 064   US-A- 3 405 770
US-A- 3 532 174   US-A- 3 876 016
US-A- 4 276 943   US-A- 4 323 991

N.T.I.S. TECHNICAL NOTES, March 1987,
page 248, Springfield, VA, US; "Fluidics in
borehole drilling"

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Kitsios, Efstathios Eugene
Volmerlaan 6
NL-2280 AB Rijswijk(NL)**

EP 0 304 988 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a method and apparatus for producing pressure variations in a stream of drilling fluid present in a pipe string within a borehole.

British patent No. 1,198,328 discloses a fluidic oscillator having an inlet conduit of which two opposite sides are in communication with two bores respectively, which bores are not in communication with each other. The fluidic oscillator switches a stream of drilling fluid between two outlets which generates pressure variations in the main stream of the drilling fluid. Said pressure variations are transmitted to a cavity inside the bit which is down in the drilling hole. In this way Helmholz resonators are formed, which are resonant at the operating frequency of the fluidic oscillator unit. This resonance creates resonant pressure variations in the drilling fluid that produce a hammering action of the drill bit.

Such an arrangement leads to objections in as much as the effect of these resonant pressure variations is severely limited. At the one hand, the high bottom hole pressures in deep holes reduce the maximum pressure gradients which can be reached with this type of apparatus. At the other hand, the inertia of the quite heavy drilling fluid reduces the possible frequency band, so that only a relatively slow hammering action on the drilling bit can be obtained. The latter instance fails to provide an appreciable improvement of the drilling conditions, in order to raise the drilling rate. Furthermore, these pressure variations are not strong enough to jar and loosen a drill pipe string that is stuck in the borehole.

US patent No. 4,323,991 discloses a telemetry system for transmitting fluid pulses from a fluidic pulser in a drill string to a receiver. The known system has the disadvantage that vulnerable electrical equipment is required in the drill string in order to create the fluid pulses, which equipment is in the form of an electrical actuator receiving power from a generator driven by a mud turbine. The pulser has two control channels which are separated from each other by the electrical actuator, which control channels are in communication with opposite sides of an inlet conduit of the pulser.

The object of the invention is to remove these and other objections and provide a method and apparatus for producing pressure variations in a drilling fluid present in a borehole that better satisfy the requirements of practice. In particular, it is an object of the present invention to increase the pressure gradients that can be obtained, so that these increased pressure gradients enhance the drilling conditions and thus drilling rates. Further, the jarring and liberation of stuck drill strings is also possible with the increase in pressure gradients.

In accordance with the invention, this object is achieved by a method for producing pressure variations in a stream of drilling fluid in a pipe string within a borehole, said method comprising introducing said stream into an inlet conduit of a fluidic oscillator thereby establishing a cyclic fluidic oscillation in two outlet flows emerging from the oscillator; amplifying the oscillating flow of drilling fluid to establish a series of high pressure gradients in the drilling fluid by receiving a first outlet flow from the fluidic oscillator in a radial inlet of a fluidic vortex amplifier and receiving a second outlet flow from the fluidic oscillator in a tangential inlet of the fluidic vortex amplifier; and directing a flow from a central outlet of the fluidic vortex amplifier towards the bottom of the borehole, characterized in that the step of introducing said stream into the fluidic oscillator comprises introducing said stream into a Coanda type fluidic oscillator of which opposite sides of the inlet conduit are in fluid communication with each other via a feedback loop conduit thereby automatically establishing said oscillation.

The apparatus according to the invention comprises at least one fluidic oscillator mounted in said pipe string for producing pressure variations in the stream of drilling fluid, said oscillator being provided with an inlet conduit, a first and a second outlet conduit; and at least one fluidic amplifier mounted in said pipe string downstream from the fluidic oscillator disposed to receive the oscillating flow of the stream of drilling fluid from the fluidic oscillator and to establish a series of high pressure gradients in the drill fluid flow, said amplifier being a vortex amplifier having a radial inlet port connected to the first outlet conduit of the fluidic oscillator and having a tangential inlet port connected to the second outlet conduit of the fluidic oscillator and having a central outlet upstream a drill bit carried by the pipe string, characterized in that the fluidic oscillator comprises a Coanda type fluidic oscillator of which opposite sides of the inlet conduit are in fluid communication with each other via a feedback loop conduit.

With the method and apparatus according to the invention fluidic oscillation is created automatically by the application of the Coanda type fluidic oscillator having an inlet conduit of which opposite sides are in fluid communication with each other via the feedback loop conduit.

Preferably the apparatus according to the invention is mounted somewhere in the bottom hole assembly of a drill string. The optimum location depends on the drilling circumstances.

The invention will now be further described referring to the accompanying schematic drawing of a preferred embodiment, in which:

Fig. 1 shows a simplified diagram of the principle of the invention; and

Fig. 2 shows a perspective view of a preferred embodiment in which the principle of Fig. 1 is applied.

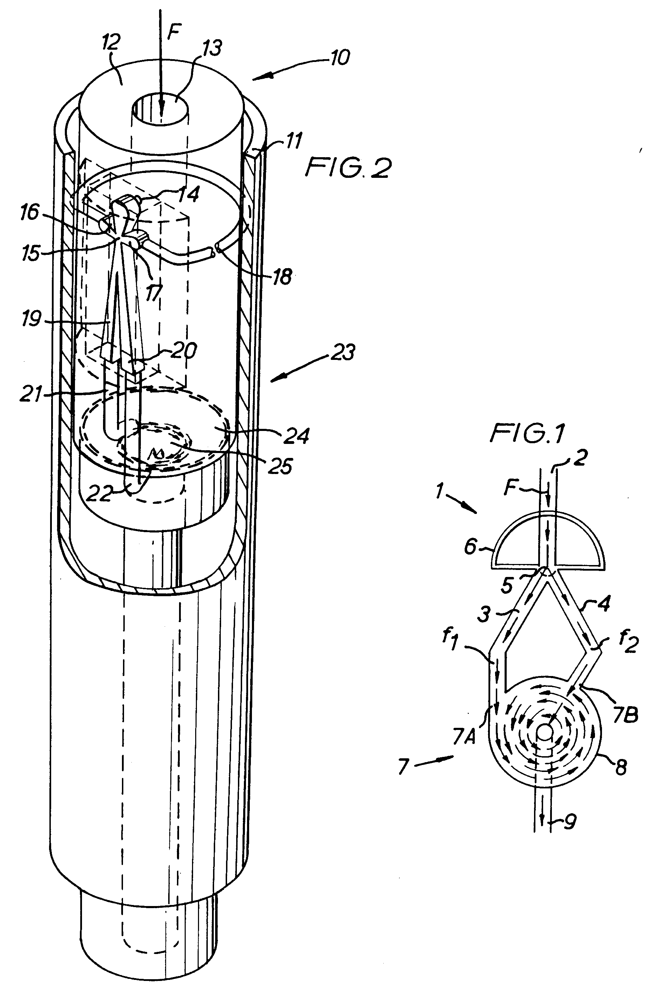

The diagram of Fig. 1 shows firstly a fluidic oscillator which has been generally indicated with reference numeral 1. The oscillator 1 comprises an inlet conduit 2, that receives a fluid feed flow F, in this case drilling fluid, the so-called mud. The inlet conduit 2 bifurcates into two channels 3 and 4.

The one outer side of the inlet conduit 2 is at the bifurcation 5 connected by a feedback loop conduit 6 with the other side of said inlet conduit 2. At high enough Reynolds numbers, the flow F is diverted to either one of the two channels 3 and 4. This diversion or switching action can be obtained automatically through the feedback loop conduit 6 that transfers the pressure at the side of either channel. This switching action is caused by the Coanda effect, which is known per se and will therefore not further be discussed. The result being, however, that a continuous inlet flow F is transformed into two discontinuous flows f1 and f2 in channels 3 and 4, respectively.

The frequency of the switching action can be controlled by the rate of the inlet flow F. If the flow rate is increased the frequency also increases. Also by varying the length of the feedback loop conduit 6, the frequency can be influenced. If the length of the loop conduit 6 is increased or this one contains a retarding means of the pressure transmission the frequency of switching and thus of the two discontinuous flows f1 and f2 is decreased.

The channels 3 and 4 of the oscillator are connected to the two inlet ports 7A and 7B of the fluidic vortex amplifier which has been generally indicated with reference numeral 7. The inlet port 7A is tangential and the inlet port 6 is radial whereas the central outlet 9 of the vortex chamber 8 is axial. When the oscillator 1 discharges fluid through channel 3 into the tangential inlet port 7A, a vortex is formed in the vortex chamber 8 before the central outlet 9. Consequently there is a large flow resistance and therefore a large pressure drop in the channel 3. This results in a rapid deceleration of the fluid flow f1. When on the other hand the oscillator 1 discharges through the channel 4 into the radial inlet port 7B of the vortex chamber 8, the vortex in there disappears and a radial flow is established to the cental outlet 9. This gives only a small pressure drop and therefore a large flow f2 develops causing a rapid acceleration of the fluid flow f2 in the channel 4. Now the oscillator 1 switches back from inlet port 7A to inlet port 7B, and again a deceleration of the fluid flow f1 occurs. This switching action in combination with the vortex amplifier 7 results in high pressure variations or pulses. Typically a useful range of frequencies is in the order of 1-50 Hz.

EXAMPLE

In a typical embodiment, the flow f1 through channel 3 is about six times less than the flow f2 through channel 4. The speed of response of the vortex amplifier 7 is of the order of milliseconds (less than the acoustic delay of a typical drill string). An instantaneous change of resistance can then be assumed. From flow calculations based on wave theory and a maximum flow rate of 0.02 m/s, it can be calculated that blows of the order of 3 tons will be delivered at a frequency which can be adjusted by the flow rate through it.

Fig. 2 shows a preferred embodiment of the invention. The apparatus has been generally indicated with reference numeral 10 and is preferably mounted in the bottom section of a drill string 11. The apparatus 10 comprises a body 12 having a central bore 13 for transporting drilling fluid or so-called mud (not shown). Into this bore 13 opens the radial inlet conduit 14 of the fluidic oscillator making a 90 degree bend and connecting to the bifurcation 15. From this bifurcation 15 extend two side branch conduits 16, 17 to either side, that are mutually connected by the feedback loop conduit 18.

Furthermore two switching channel conduits 19 and 20 diverge from the bifurcation 15 and are connected to the inlet conduits 21 and 22, respectively, of the fluidic vortex amplifier generally indicated with 23. The inlet conduits 21 and 22 make a 90 degree bend and discharge tangentially and radially, respectively, into the bowl-shaped vortex chamber 24 having a central axial outlet 25. This outlet 25 is in this case a continuation of the central bore 13 of the body 12 of the apparatus.

One method of producing pressure variations is leading the full flow F of drilling fluid through the apparatus 10, by which the pressure gradient is established. The activation of the apparatus 10 can be made, for example, by dropping an object (not shown), such as a ball, into the fluid bore 13. This closes a valve (not shown). If the pulses that are created are matched with the resonant frequency of the drill string in the hole, this drill string can be exited and amplify these resonant forces. These resonant forces can be used for different applications. If there are high axial forces, these can be used for controlling at least one jarring means when the drill string has become stuck in the drill hole. If the axial forces are moderate to small, these can be used for improving the drilling conditions and especially the drilling rate of the bit. The resulting blows of the bit against the hole bottom increases the penetration rate and may reduce the number of drill collars.

Another field of application is in horizontal drilling, where the drill string is not rotated. Then the apparatus can be used to keep the drill string in motion so as to reduce frictional forces between the drill string/hole interface. The pressure pulses can also be used as a source for seimic interpretation, e.g., for locating the downhole position of the bit.

## Claims

1. A method for producing pressure variations in a stream of drilling fluid in a pipe string within a borehole, said method comprising introducing said stream into an inlet conduit of a fluidic oscillator thereby establishing a cyclic fluidic oscillation in two outlet flows emerging from the oscillator; amplifying the oscillating flow of drilling fluid to establish a series of high pressure gradients in the drilling fluid by receiving a first outlet flow from the fluidic oscillator in a radial inlet of a fluidic vortex amplifier and receiving a second outlet flow from the fluidic oscillator in a tangential inlet of the fluidic vortex amplifier; and directing a flow from a central outlet of the fluidic vortex amplifier towards the bottom of the borehole, characterized in that the step of introducing said stream into the fluidic oscillator comprises introducing said stream into a Coanda type fluidic oscillator of which opposite sides of the inlet conduit are in fluid communication with each other via a feedback loop conduit thereby automatically establishing said oscillation.

2. A method in accordance with claim 1, further comprising mounting said fluidic oscillator and amplifier in a bottom hole assembly of a drill string which carries a drill bit.

3. A method in accordance with claim 2, further comprising selecting the location for the fluidic oscillator and amplifier within the bottom hole assembly as a function of the drilling circumstances.

4. A method in accordance with claim 2, further comprising tuning a frequency of the pressure variation to a resonant frequency of the drill string by adjusting the rate of flow of drilling fluid through the fluidic oscillator and amplifier.

5. A method in accordance with claim 1, further comprising triggering the production of pressure variations by dropping an object into the drill string.

6. An apparatus for producing pressure variations in a stream of drilling fluid present in a pipe string within a borehole, comprising at least one fluidic oscillator mounted in said pipe string for producing pressure variations in the stream of drilling fluid, said oscillator being provided with an inlet conduit, a first and a second outlet conduit; and at least one fluidic amplifier mounted in said pipe string downstream from the fluidic oscillator disposed to receive the oscillating flow of the stream of drilling fluid from the fluidic oscillator and to establish a series of high pressure gradients in the drill fluid flow, said amplifier being a vortex amplifier having a radial inlet port connected to the first outlet conduit of the fluidic oscillator and having a tangential inlet port connected to the second outlet conduit of the fluidic oscillator and having a central outlet upstream a drill bit carried by the pipe string, characterized in that the fluidic oscillator comprises a Coanda type fluidic oscillator of which opposite sides of the inlet conduit are in fluid communication with each other via a feedback loop conduit.

7. An apparatus in accordance with claim 6, wherein the apparatus is arranged in the lower section of the pipe string, somewhere in the bottom hole assembly near the drill bit.

8. An apparatus in accordance with claim 7, further comprising means in the bottom hole assembly adapted for cooperation with an object dropped into the pipe string to activate the apparatus.

## Patentansprüche

1. Verfahren zur Erzeugung von Druckänderungen in einem Strom einer Bohrflüssigkeit in einem Rohrstrang innerhalb eines Bohrloches, wobei bei diesem Verfahren der Strom in eine Einlaßleitung eines Flüssigkeitsoszillators eingeführt wird, wodurch eine zyklische Flüssigkeitsoszillation in zwei aus dem Oszillator austretenden Auslaßströmen erzeugt wird; der Oszillationsstrom der Bohrflüssigkeit verstärkt wird, um eine Reihe von Hochdruckgradienten in der Bohrflüssigkeit zu erzeugen, indem ein erster Auslaßstrom aus dem Flüssigkeitsoszillator in einem Radialeinlaß eines Flüssigkeits-Wirbelstromverstärkers und ein zweiter Auslaßstrom aus dem Flüssigkeitsoszillator in einem Tangentialeinlaß des Flüssigkeits-Wirbelstromverstärkers empfangen wird; und ein Strom aus einem zentralen Auslaß des Flüssigkeits-Wirbelstromverstärkers gegen den Boden des Bohrloches gerichtet wird, dadurch gekennzeichnet, daß der Schritt des Einführens des Stromes in den Flüssigkeitsoszillator das Einführen des Stromes in einen Flüssigkeitsoszillator vom Coanda-Typ umfaßt, wobei gegenüberliegende Seiten der Einlaßleitung miteinander über eine Rückführ-Schleifenleitung in Flüssigkeitsverbindung stehen, wodurch automatisch die Oszillation erzeugt wird.

2. Verfahren nach Anspruch 1, bei welchem der Flüssigkeitsoszillator und der Flüssigkeitsverstärker in einer Bohrloch-Bodenanordnung eines Bohrgestänges montiert sind, welches eine Bohrkrone trägt.

3. Verfahren nach Anspruch 2, bei welchem die Anordnung des Flüssigkeitsoszillators und des Flüssigkeitsverstärkers innerhalb der Bohrlochanordnung als Funktion der Bohrbedingungen gewählt werden.

4. Verfahren nach Anspruch 2, bei welchem die Frequenz der Druckänderung auf eine Resonanzfrequenz des Bohrgestänges eingestellt wird, indem der Stromdurchsatz der Bohrflüssigkeit durch den Flüssigkeitsoszillator und Flüssigkeitsverstärker eingestellt werden.

5. Verfahren nach Anspruch 1, bei welchem die Erzeugung von Druckänderungen ausgelöst wird, indem ein Gegenstand in das Bohrgestänge fallengelassen wird.

6. Vorrichtung zur Erzeugung von Druckänderungen in einem Strom einer Bohrflüssigkeit, die in einem Rohrgestänge innerhalb eines Bohrloches vorhanden ist, umfassend zumindest einen Flüssigkeitsoszillator, der in dem Rohrgestänge montiert ist, um Druckänderungen im Strom der Bohrflüssigkeit zu erzeugen, wobei der Oszillator mit einer Einlaßleitung versehen ist, einer ersten Auslaßleitung und einer zweiten Auslaßleitung; und zumindest einen Flüssigkeitsverstärker, der in dem Rohrgestänge stromabwärts des Flüssigkeitsoszillators montiert und so angeordnet ist, daß er den oszillierenden Strom der Bohrflüssigkeit aus dem Flüssigkeitsoszillator empfängt und eine Reihe von Hochdruckgradienten in dem Bohrflüssigkeitsstrom erzeugt, wobei der Verstärker ein Wirbelstromverstärker ist, der eine radiale Einlaßöffnung, die an die erste Auslaßleitung des Flüssigkeitsoszillators angeschlossen ist, und eine tangentiale Einlaßöffnung, die an die zweite Auslaßleitung des Flüssigkeitsoszillators angeschlossen ist, sowie einen zentralen Auslaß stromaufwärts einer Bohrkrone aufweist, die vom Rohrgestänge getragen ist, dadurch gekennzeichnet, daß der Flüssigkeitsoszillator einen Flüssigkeitsoszillator vom Coanda-Typ aufweist, wobei gegenüberliegende Seiten der Einlaßleitung miteinander über eine Rückführ-Schleifenleitung in Flüssigkeitsverbindung stehen.

7. Vorrichtung nach Anspruch 6, bei welcher die Vorrichtung im unteren Abschnitt des Rohrgestänges angeordnet ist, etwa in der Bohrloch-Bodenanordnung nahe der Bohrkrone.

8. Vorrichtung nach Anspruch 7, bei welcher Mittel in der Bohrloch-Bodenanordnung vorhanden sind, um im Zusammenwirken mit einem in das Bohrgestänge fallengelassenen Gegenstand die Vorrichtung zu aktivieren.

**Revendications**

1. Procédé de production de variations de pression dans un courant de fluide de forage dans un train de tiges situé dans un puits, ledit procédé consistant à introduire ledit courant dans un conduit d'entrée d'un oscillateur fluidique de manière à produire une oscillation fluidique cyclique dans deux flux de sortie émergeant de l'oscillateur ; à amplifier le flux oscillant du fluide de forage, de manière à produire une série de gradients élevés de pression dans le fluide de forage par réception d'un premier flux de sortie de l'oscillateur fluidique dans une entrée radiale d'un amplificateur fluidique à tourbillonnement et par réception d'un second flux de sortie de l'oscillateur fluidique dans une entrée tangentielle de l'amplificafeur fluidique à tourbillonnement; et à diriger un flux d'une sortie centrale de l'amplificateur fluidique à tourbillonnement vers le fond du puits, caractérisé en ce que l'étape d'introdution dudit courant dans l'oscillateur fluidique comprend l'introduction dudit courant dans un oscillateur fluidique de type Coanda dont des côtés opposés du conduit d'entrée sont en communication fluidique l'un avec l'autre par un conduit formant une boucle de réaction, de manière à produire ainsi automatiquement ladite oscillation.

2. Procédé selon la revendication 1, consistant par ailleurs à monter ledit oscillateur fluidique et ledit amplificateur dans un ensemble du fond du trou d'un train de forage qui supporte un trépan de forage.

3. Procédé selon la revendication 2, consistant par ailleurs à sélectionner l'emplacement de l'oscillateur fluidique et de l'amplificateur à l'intérieur de l'ensemble formant le trou de fond en fonction des conditions de forage.

4. Procédé selon la revendication 2, consistant par ailleurs à accorder une fréquence de la variation de pression à une fréquence de résonnance du train de forage par réglage du débit du fluide de forage passant par l'oscillateur fluidique et l'amplificateur.

5. Procédé selon la revendication 1, consistant par ailleurs à déclencher la production de variations de pression en faisant tomber un objet dans le train de forage.

6. Appareil de production de variations de pression dans un courant de fluide de forage se trouvant dans un train de tiges à l'intérieur d'un puits, comprenant au moins un oscillateur fluidique monté dans ledit train de tiges pour produire des variations de pression dans le courant de fluide de forage, ledit oscillateur étant équipé d'un conduit d'entrée, d'un premier et d'un second conduits de sortie ; et au moins un amplificateur fluidique monté dans ledit train de tiges en aval de l'oscillateur fluidique et disposé de manière à recevoir le flux oscillant du courant de fluide de forage de l'oscillateur fluidique et à produire une série de gradients élevés de pression dans le flux du fluide de forage, ledit amplificateur étant un amplificateur à tourbillonnement comprenant un orifice radial d'entrée raccordé au premier conduit de sortie de l'oscillateur fluidique et ayant un orifice tangentiel d'entrée raccordé au second conduit de sortie de l'oscillateur fluidique et ayant de plus une sortie centrale en amont d'un trépan supporté par ledit train de tiges, caractérisé en ce que l'oscillateur fluidique consiste en un oscillateur fluidique de type Coanda dont des côtés opposés du conduit d'entrée sont en communication fluidique l'un avec l'autre par un conduit formant une boucle de réaction.

7. Appareil selon la revendication 6, dans lequel l'appareil est disposé dans la partie inférieure du train de tiges, en un emplacement situé dans l'ensemble formant le trou de fond à proximité du trépan.

8. Appareil selon la revendication 7, comprenant par ailleurs des moyens situés dans l'ensemble formant le trou de fond et destinés à coopérer avec un objet qu'on a laissé tomber dans le train de tiges pour mettre en marche l'appareil.

FIG.2

FIG.1